Europäisches Patentamt

European Patent Office

Office européen des brevets

(19)

(11) Veröffentlichungsnummer: **0 175 947**
**B1**

(12) EUROPÄISCHE PATENTSCHRIFT

(45) Veröffentlichungstag der Patentschrift:
09.08.89

(51) Int. Cl.⁴: **H04L 27/14**

(21) Anmeldenummer: **85110770.6**

(22) Anmeldetag: **27.08.85**

(54) Schaltungsanordnung zum Demodulieren eines binären FM-Signals.

(30) Priorität: **20.09.84 DE 3434569**

(43) Veröffentlichungstag der Anmeldung:
**02.04.86 Patentblatt 86/14**

(45) Bekanntmachung des Hinweises auf die Patenterteilung:
**09.08.89 Patentblatt 89/32**

(84) Benannte Vertragsstaaten:
**AT CH DE LI NL SE**

(56) Entgegenhaltungen:
**DE-A- 1 537 326**
**DE-A- 2 928 976**
**DE-B- 2 516 679**
**GB-A- 2 102 223**

**IBM TECHNICAL DISCLOSURE BULLETIN, Band 17,
Nr. 6, November 1974, Seiten 1718-1725, New York, US;
J.D. DWIRE et al.: "Digital frequency shift key
demodulator"**

(73) Patentinhaber: **Siemens Aktiengesellschaft Berlin und
München, Wittelsbacherplatz 2, D-8000 München 2(DE)**

(72) Erfinder: **Dieter, Georg, Dipl.-Ing., Reichertshausen 1,
D-8195 Egling 2(DE)**
Erfinder: **Hieninger, Johann, Dipl.-Ing. (FH),
Höllentalstrasse 13, D-8000 München 70(DE)**

**Beschreibung**

Die Erfindung bezieht sich auf eine Schaltungsanordnung zum Demodulieren eines insbesondere über einen bandbegrenzten Kanal übertragenen binären FM-Signals, welches mit einer einem Binärsignal "0" entsprechenden ersten Frequenz oder mit einer einem Binärsignal "1" entsprechenden zweiten Frequenz auftritt, die von der ersten Frequenz verschieden ist, wobei der Übergang von der ersten zur zweiten Frequenz und der Übergang von der zweiten zur ersten Frequenz jeweils so erfolgt, daß innerhalb des jeweiligen Übergangs auch Frequenzen zwischen der ersten und der zweiten Frequenz auftreten, mit einer Einrichtung, die bezüglich des binären FM-Signals zunächst eine Periodendauermessung durchführt, wobei die die jeweilige Dauer eines Schwingungszuges des betreffenden FM-Signals angebende Meßsignale als Adressen zur Ansteuerung eines Speichers herangezogen werden, in welchem in durch die dem Binärwert "0" bzw. "1" entsprechenden Adressen bezeichneten Speicherplätzen jeweils ein Binärsignal "0" bzw. "1" gespeichert ist, welches auf die Adressierung des jeweiligen Speicherplatzes hin abgegeben wird.

Es ist bereits eine Schaltungsanordnung zur Demodulation amplitudenbegrenzter, frequenzmodulierter Datensignale bekannt (DE-C 2 516 679), die einerseits unmittelbar und andererseits über ein Phasendrehglied einem Multiplizierer zugeführt werden, wobei der Ausgang des Multiplizierers an einem Tiefpaß angeschlossen ist, der ein demoduliertes Datensignal abgibt. Das Phasendrehglied besteht dabei aus einer Serienkombination, die einen aktiven RC-Tiefpaß zweiter Ordnung und einen Amplitudenbegrenzer umfaßt. Als Multiplizierer dient ein digitaler Halbaddierer. Mit Hilfe dieser bekannten Schaltungsanordnung ist es zwar möglich, eine Demodulation von frequenzmodulierten Datensignalen mit relativ geringem schaltungstechnischem Aufwand zu erzielen. Eine gewisse Schwierigkeit ergibt sich jedoch daraus, daß der Übergang von einem einem Binärsignal "0" oder "1" entsprechenden Datensignal zu einem einem Binärsignal "1" oder "0" entsprechenden Datensignal nicht in jedem Falle mit der an sich gewünschten Genauigkeit bestimmt werden kann.

Es ist ferner ein nichtlinearer Frequenzdiskriminator zur Demodulation von frequenzmodulierten binären Nachrichtenzeichen, insbesondere Telegrafiezeichen, bekannt (DE-A 1 537 326), bei dem das frequenzmodulierte Signal über ein Phasendrehglied mit konstanter Verzögerung an dem einen Eingang einer Verknüpfungsschaltung liegt.

Das betreffende frequenzmodulierte Signal liegt außerdem über ein Phasensprungnetzwerk, vorzugsweise in Form eines RC-Netzwerks, welches eine Phasendrehung um 180 Grad in einem sehr engen Frequenzbereich aufweist, an dem anderen Eingang der betreffenden Verknüpfungsschaltung. Diese Verknüpfungsschaltung nimmt einen Vergleich der beiden frequenzmodulierten Signale vor und gibt bei Ermittlung einer Phasengleichheit die eine Polarität und bei Gegenphasigkeit der beiden Signale eine andere Polarität an ihrem Ausgang ab. Auch mit Hilfe dieses bekannten Frequenzdiskriminators gelingt es nicht ohne weiteres, in dem frequenzmodulierten Signal den Übergang vom einen Binärzustand in den anderen Binärzustand genau zu bestimmen.

Es ist auch schon ein digitaler Frequenzumtast-Demodulator bekannt (IBM Technical Disclosure Bulletin, Vol. 17. No. 6 November 1974, Seiten 1718 bis 1725), bei dem die zu demodulierenden Signale zunächst einem Verstärker und Begrenzer zugeführt werden, an dessen Ausgang zwei abgestimmte Schaltungen angeschlossen sind. Die eine abgestimmte Schaltung ist auf die Frequenz abgestimmt, in der die einen Datensignalbits auftreten; die andere abgestimmte Schaltung ist auf die Frequenz abgestimmt, mit der die anderen Datensignalbits bits auftreten. Am Ausgang der beiden abgestimmten Schaltungen ist ein Schwellwertdetektor angeschlossen, der das demodulierte Datensignal abgibt. Bezüglich dieses Demodulators ist es möglich, einen Einzelzellen-Intervall-Zähler und einen Prozessor zu verwenden, um die Ermittlung und Rekonstruktion von Algorithmen zur Implementierung des Demodulators auszuführen. Eine dritte mögliche Implementierung des bekannten Demodulators besteht darin, einen Einzelzellen-Intervall-Zähler, einen Prozessor und eine Tabelle zu verwenden, die in dem Prozessor-Speicher gespeichert ist. Die gerade betrachteten Schaltungsmaßnahmen genügen jedoch ebenfalls nicht, um den Übergang in einem binären FM-Signal von einem Binärzustand in den anderen Binärzustand genau bestimmen zu können.

Der Erfindung liegt demgemäß die Aufgabe zugrunde, eine Schaltungsanordnung der eingangs genannten Art so weiterzubilden, daß sie mit relativ geringem schaltungstechnischen Aufwand den Übergang in dem binären FM-Signal vom einen Binärzustand in den anderen Binärzustand genau zu bestimmen gestattet.

Gelöst wird die vorstehend aufgezeigte Aufgabe bei einer Schaltungsanordnung der eingangs genannten Art erfindungsgemäß dadurch, daß bei Überschreiten oder Unterschreiten jeweils eines vorgegebenen Schwellwertes durch das jeweilige Meßsignal ein Zähler in eine Zählerstellung voreingestellt wird, die der Differenz zwischen der gerade ermittelten Periodendauer und der mittleren Periodendauer des FM-Signals entspricht, daß der betreffende Zähler durch ihm ständig zugeführte Zählimpulse in seiner Zählerstellung so lange geändert wird, bis er eine bestimmte, von der genannten voreingestellten Zählerstellung verschiedene Zählerstellung erreicht hat, und daß ab Erreichen der betreffenden bestimmten Zählerstellung die Abgabe eines Binärsignals mit einem vom Binärwert des bisher abgegebenen Binärsignals verschiedenen Binärwert erfolgt.

Die Erfindung bringt den Vorteil mit sich, daß auf relativ einfache Weise der Übergang in dem jeweiligen binären FM-Signal vom einen Binärzustand in den anderen Binärzustand genau bestimmt werden kann. Dabei ist ferner von Vorteil, daß allein mit digital arbeitenden Schaltungselementen ausgekommen werden kann.

Vorzugsweise ist der Speicher ausgangsseitig mit Signaleingängen eines bistabilen Kippgliedes verbunden, und ferner ist der Augang des Zählers mit einem Umsteuereingang des betreffenden bistabilen Kippgliedes verbunden, von dessen Ausgangsseite die Binärsignale abnehmbar sind. Dies bringt den Vorteil eines besonders geringen schaltungstechnischen Aufwands hinsichtlich der Abgabe der Binärsignale mit sich.

Zweckmäßigerweise ist der genannte Zähler ein Rückwärtszähler, dessen Zählerstellung im Rhythmus von Taktimpulsen geändert wird, deren Taktperiodendauer kurz ist im Vergleich zur jeweiligen Periodendauer des FM-Signals. Hierdurch ergibt sich der Vorteil eines besonders geringen schaltungstechnischen Aufwands hinsichtlich der Realisierung des genannten Zählers.

Zur Erzielung eines besonders sicheren Betriebs wird das FM-Signal vorzugsweise in ein Rechtecksignal umgeformt, welches zur Steuerung eines Periodendauerzählers dient, dem zur Zählung Impulse mit einer Periodendauer zugeführt werden, die kurz ist im Vergleich zur jeweiligen Periodendauer des FM-Signals. Der betreffende Periodendauerzähler ist ausgangsseitig mit der Eingangsseite des Speichers verbunden.

Anhand von Zeichnungen wird die Erfindung nachstehend beispielsweise näher erläutert.

FIG 1 zeigt in einem Blockschaltbild eine Schaltungsanordnung gemäß einer Ausführungsform der Erfindung.

FIG 2 veranschaulicht in einem Signal-/Impulsdiagramm die Arbeitsweise der in FIG 1 dargestellten Schaltungsanordnung.

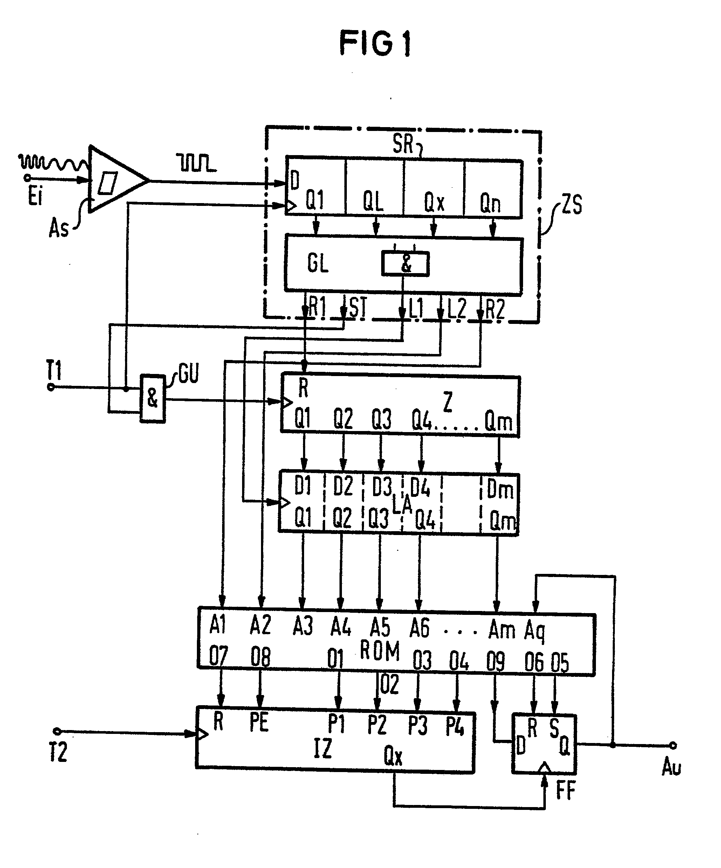

In FIG 1 wird ein binäres FM-Signal einem Eingangsanschluß Ei zugeführt, an dem die Eingangsseite einer Abtastschaltung As angeschlossen ist, die dazu dient, das ihr eingangsseitig zugeführte sinusförmige Signal in ein Rechtecksignal umzuwandeln und dieses ausgangsseitig abzugeben.

Der Ausgang der Abtastschaltung As ist mit dem Datensignaleingang D eines Schieberegisters SR verbunden, welches aus gleichartig aufgebauten bistabilen Kippgliedern vom D-Typ bestehen mag. Die Takteingänge der betreffenden bistabilen Kippglieder sind gemeinsam an einem Taktanschluß T1 angeschlossen, dem ständig Taktimpulse zugeführt werden, deren Periodendauer kurz ist im Vergleich zur Periodendauer der dem Datensignaleingang D des Schieberegisters SR jeweils zugeführten Signale.

Mit den Ausgängen der einzelnen bistabilen Kippglieder und damit der Schieberegisterstufen des Schieberegisters SR ist die Eingangsseite einer Verknüpfungsschaltungsanordnung GL verbunden, bezüglich der lediglich ein UND-Verknüpfungsglied angedeutet ist. Die betreffenden Ausgänge des Schieberegisters SR sind mit Q1, QL, Qx und Qn angedeutet. Die Verknüpfungsschaltungsanordnung GL bildet zusammen mit dem Schieberegister SR eine Zeitsteuerschaltung, deren Bedeutung weiter unten noch näher ersichtlich werden wird. An dieser Stelle sei jedoch angemerkt, daß die Verknüpfungsschaltungsanordnung GL eine Reihe von Ausgängen aufweist, die mit R1, ST, L1, L2 bzw. R2 bezeichnet sind.

An dem Ausgang R1 der Verknüpfungsschaltungsanordnung GL ist ein als Periodendauerzähler dienender Zähler Z mit seinem Rücksetzeingang R angeschlossen. Dieser Zähler Z ist mit seinem Zähleingang am Ausgang eines UND-Gliedes GU angeschlossen, welches mit einem Eingang an dem Taktanschluß T1 und mit einem weiteren Eingang an dem Ausgang ST der Verknüpfungsschaltungsanordnung GL angeschlossen ist. Der Zähler Z weist eine Anzahl von Ausgängen Q1, Q2, Q3, Q4 bis Qm auf, an denen er entsprechend seiner jeweiligen Zählerstellung Ausgangssignale abzugeben gestattet.

An den Ausgängen Q1 bis Qm des Periodendauerzählers Z ist ein auch als Latch-Register zu bezeichnendes Zwischenregister LA mit Übernahmeeingängen D1, D2, D3, D4 bis Dm angeschlossen. Mit einem Freigabeeingang ist das betreffende Register LA an dem Ausgangsanschluß L1 der Verknüpfungsschaltungsanordnung GL angeschlossen. Das betreffende Register LA gibt die in ihm jeweils zwischengespeicherten Signale bzw. Bits an Ausgängen Q1, Q2, Q3, Q4 bis Qm ab.

An den zuvor erwähnten Ausgängen Q1 bis Qm des Zwischenregisters LA ist ein hier durch einen Festwertspeicher gebildeter Speicher ROM mit Eingängen A3, A4, A5, A6 bis Am angeschlossen. Über diese Eingänge A3 bis Am wird der Speicher ROM von dem Zwischenregister LA her adressiert. Mit zwei weiteren Eingängen A1 und A2 ist der Speicher ROM an den Ausgangsanschlüssen R2 bzw. L2 der Verknüpfungsschaltungsanordnung GL angeschlossen.

Der Speicher ROM weist eine Reihe von Ausgängen 01 bis 08 auf. Von diesen Ausgängen sind die Ausgänge 01, 02, 03, 04 mit Eingängen P1, P2, P3, P4 eines als Interpolationszähler dienenden weiteren Zählers IZ verbunden, auf dessen Bedeutung weiter unten noch näher eingegangen werden wird.

Mit den Ausgängen 05 und 06 ist der Speicher ROM mit dem Setzeingang S bzw. dem Rücksetzeingang R eines bistabilen Kippgliedes FF verbunden. Dieses bistabile Kippglied FF weist noch einen Dateneingang D auf, der mit dem Ausgang O7 des Speichers ROM verbunden ist. Mit einem Takteingang ist das betreffende bistabile Kippglied FF am Ausgang Qx des Interpolationszählers IZ angeschlossen. Der mit Q bezeichnete Ausgang des bistabilen Kippgliedes FF ist mit einem Ausgangsanschluß Au verbunden, an dem die jeweiligen Binärsignale auftreten, die aus der Demodulation des dem Eingangsanschluß Ei zugeführten binären FM-Signals gewonnen sind. Der betreffende Ausgang Q des bistabilen Kippgliedes FF ist ferner mit einem Eingangsanschluß Aq des Speichers ROM verbunden. Dieser Eingang Aq steht mit dem Ausgangsanschluß 09 des Speichers ROM in einer Verknüpfungsbeziehung, und zwar z.B. entsprechend einer Negation. Es sei angemerkt, daß der Eingang Aq des Speichers ROM dazu benötigt wird, bei Auftreten eines Polaritätswechsels in dem am Ausgang Au auftretenden Datensignal die Richtung dieses Polaritätswechsels zu ermitteln und damit über den Ausgangsanschluß 09 den D-Eingang des Kippgliedes FF auf die folgende Polaritätsänderung richtig vorzubereiten.

Der Interpolationszähler IZ weist noch drei weitere Eingangsanschlüsse auf, deren einer ein Rücksetzeingang R ist, welcher mit dem Ausgangsanschluß 07 des Speichers ROM verbunden ist. Ein mit PE bezeichneter Eingangsanschluß des Interpolationszählers Iz ist ein Ladeeingangsanschluß, der mit dem Ausgangsanschluß 08 des Speichers ROM verbunden ist. Der Interpolationszähler IZ weist schließlich noch einen Zähleingang auf, der mit einem Taktanschluß T2 verbunden ist, dem ständig Taktimpulse mit einer Periodendauer zugeführt werden, die kurz ist im Vergleich zur Periodendauer der am Eingangsanschluß Ei auftretenden binären FM-Signale.

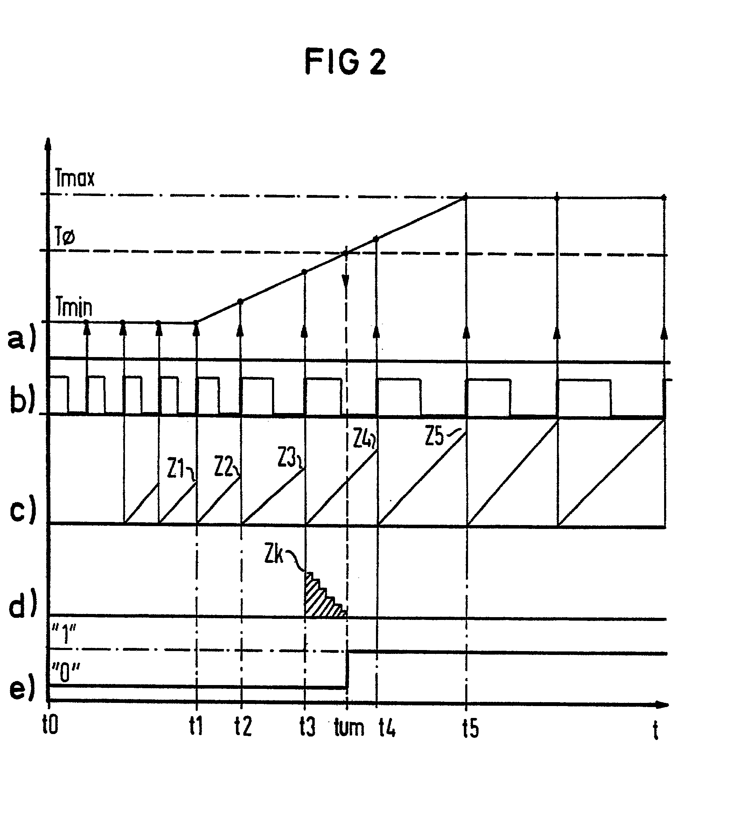

Nachdem zuvor der Aufbau der in FIG 1 dargestellten Schaltungsanordnung in dem hier interessierenden Umfang erläutert worden ist, sei nunmehr die Arbeitsweise dieser Schaltungsanordnung unter Bezugnahme auf das in FIG 2 dargestellte Diagramm betrachtet.

FIG 2 zeigt über die Zeitachse t aufgetragen, wie sich der in dem binären FM-Signal vorhandene Übergang vom Binärzustand "0" zum Binärzustand "1" auswirkt. In diesem Zusammenhang ist anzumerken, daß das FM-Signal entsprechend dem Binärzustand "0" mit einer hohen Frequenz und damit mit einer kurzen Periodendauer - in FIG 2 mit Tmin bezeichnet - und entsprechend dem Binärzustand "1" mit einer niedrigen Frequenz und damit einer langen Periodendauer - in FIG 2 mit Tmax bezeichnet - auftritt. Diese beiden Periodendauern sind in FIG 2a) schematisch angedeutet. Zwischen den beiden Periodendauern Tmin und Tmax liegt eine mittlere Periodendauer, die mit T0 bezeichnet ist. Diese mittlere Periodendauer wird im vorliegenden Fall als diejenige Periodendauer betrachtet, bei der der Übergang vom einen Binärzustand in den anderen Binärzustand erfolgt.

In FIG 2b) sind die über die Zeitachse t auftretenden Periodendauern im einzelnen veranschaulicht. Die in FIG 2b) gezeigten Impulse werden von der Zeitsteuerschaltung ZS gemäß FIG 1 aus den der Schaltungsanordnung jeweils zugeführten binären FM-Signalen abgeleitet. Die ansteigenden Impulsflanken der in FIG 2b) gezeigten Impulse werden dem Rücksetzeingang R des Periodendauerzählers Z zugeführt; sie bewirken die jeweilige Zurückstellung dieses Zählers Z, wie dies aus der Darstellung gemäß FIG 2c) ersichtlich ist. Dabei veranschaulichen die schräg nach oben verlaufenden Linien den Zählbetrieb des Periodendauerzählers Z. Die jeweils erreichte Zählerstellung dieses Zählers Z ist an den Endpunkten einiger Linien mit Z1, Z2, Z3, Z4 bzw. Z5 angedeutet. Innerhalb des Zeitbereiches t0 bis t1 erreicht der Periodendauerzähler Z stets nur die Zählerstellung Z1.

Mit Erreichen dieser Zählerstellung, aber vor Zurücksetzen des Zählers Z wird bei der Schaltungsanordnung gemäß FIG 1 die betreffende Zählerstellung in das Zwischenregister LA übernommen; dazu werden zunächst der Zählbetrieb des Zählers Z durch Abgabe eines Stopsignals "0" vom Ausgang ST der Zeitsteuerschaltung ZS gestoppt und sodann dem Zwischenregister LA vom Ausgangsanschluß L1 der Zeitsteuerschaltung ZS ein entsprechendes Übernahmesignal zugeführt. Anschließend erfolgt mit diesem in dem Zwischenregister LA zwischengespeicherten Signal - welches kennzeichnend ist für die Periodendauer Tmin des binären FM-Signals - die Adressierung des Speichers ROM. Dieser Speicher ROM enthält in seinem durch das betreffende Signal bzw. die dadurch gegebene Adresse adressierten Speicherplatz ein Binärsignal "0" gespeichert, auf das hin vom Ausgangsanschluß 06 ein "1"- und vom Ausgangsanschluß "05" ein "0"-Signal an das bistabile Kippglied FF abgegeben wird. Dieses bistabile Kippglied gibt daraufhin von seinem Ausgangsanschluß Q ein Binärsignal "0", welches damit am Ausgang Au auftritt.

Von seinen Ausgängen 01 bis 04 gibt der Speicher ROM gemäß FIG 1 kein Ausgangssignal bzw. jeweils ein Binärsignal "0" ab. Den Eingängen A2 und A1 des Speichers ROM von der Zeitsteuerschaltung ZS her jeweils zugeführte Lade- und Rücksetzimpulse bewirken keine weiteren Vorgänge in dem Interpolationszähler IZ. Dieser verbleibt in seiner Zählerstellung, welche die Endzählerstellung dieses Zählers sein mag.

Den vorstehend erläuterten Vorgängen völlig entsprechen die Vorgänge dann auch ab, wenn der Periodendauerzähler Z zum Zeitpunkt t2 die Zählerstellung Z2 erreicht, wie dies aus FIG 2 ersichtlich ist.

Auch mit Erreichen der Zählerstellung Z3 zum Zeitpunkt t3 durch den Periodendauerzähler Z laufen den vorstehend erläuterten Vorgängen entsprechende Vorgänge ab, da auch in diesem Fall die dieser Zählerstellung Z3 entsprechende Periodendauer des binären FM-Signals als einem Binärzustand "0" entsprechend gewertet wird. Im Unterschied zu den zuvor betrachteten Vorgängen bewirkt jedoch das Erreichen der Zählerstellung Z3 durch den Periodendauerzähler Z, daß nunmehr der Speicher ROM von seinen Ausgängen 01 bis 04 ein bestimmtes Binärsignal Zk in den Interpolationszähler IZ lädt. Dieses bestimmte Binärsignal ist kennzeichnend für die Differenz zwischen der Zählerstellung Z3 und der der mittleren Periodendauer des FM-Signals entsprechenden Zählerstellung des Periodendauerzählers. Die Abgabe dieses Binärsignals vom Speicher ROM erfolgt mit Rücksicht darauf, daß mit der als Meßsignal aufzufassenden Zählerstellung Z3 des Periodenzählers Z ein vorgegebener Schwellwert überschritten worden ist im Zuge des Übergangs des FM-Signals vom Binärzustand "0" zum Binärzustand "1". Das von dem Speicher ROM her an den Interpolationszähler IZ abgegebene Binärsignal wird auf das vom Ausgangsanschluß L2 der Verknüpfungsschaltungsanordnung GL abgegebene Ladesignal in den betreffenden Zähler IZ geladen.

Der Interpolationszähler IZ gemäß FIG 1 ist nunmehr durch das ihm von dem Speicher ROM her zugeführte Binärsignal voreingestellt; er arbeitet nun in einem Zählbetrieb, bis er seine Endzählerstellung erreicht hat.

Dazu zählt der Zähler IZ die seinem Zähleingang von dem Taktanschluß T2 zugeführten Taktimpulse. Mit Erreichen seiner Endzählerstellung - und zwar entweder in Vorwärtszählbetrieb oder im Rückwärtszählbetrieb - gibt der Zähler IZ von seinem Ausgangsanschluß Qx ein Binärsignal "1" bzw. einen dem Binärzustand "1" entsprechenden Impuls an den Takteingang des bistabilen Kippgliedes FF gemäß FIG 1 ab. An dieser Stelle sei angemerkt, daß gemäß FIG 2d davon ausgegangen ist, daß der Interpolationszähler IZ als Rückwärtszähler arbeitet, der bei Erreichen der 0-Zählerstellung seine Endzählerstellung erreicht hat. Zu diesem Zeitpunkt, der in FIG 2 mit tum angedeutet ist, wird das vom Ausgang 09 des Speichers ROM entsprechend vorbereitete bistabile Kippglied FF umgesteuert, so daß es nunmehr von seinem Ausgangsanschluß Q ein Binärsignal "1" abgibt, wie dies in FIG 2e veranschaulicht ist.

Mit dem anschließenden Erreichen der Zählerstellung Z4 durch den Periodendauerzähler Z erfolgt wieder lediglich eine solche Adressierung des Speichers ROM, daß dieser nunmehr lediglich von einem seiner beiden Ausgangsanschlüsse 05, 06 oder von diesen beiden Ausgangsanschlüssen ein/solche Ausgangssignal(e) abgibt, daß das bistabile Kippglied FF weiterhin gesetzt bleibt. Dies ist zu den in FIG 2 angedeuteten Zeitpunkten t4 und t5 der Fall, zu denen die Zählerstellungen Z4 und Z5 in dem Periodendauerzähler Z erreicht werden.

Mit Erreichen der Zählerstellung Z5 durch den Periodendauerzähler Z ist die maximale Periodendauer Tmax des binären FM-Signals erreicht. Diese Periodendauer bleibt dann weiterhin erhalten, weshalb das bistabile Kippglied FF gemäß FIG 1 weiterhin von seinem Ausgangsanschluß Q ein Binärsignal "1" abgibt.

Den vorstehend anhand der FIG 2 erläuterten Verhältnissen völlig entsprechende Verhältnisse laufen dann ab, wenn ein Übergang in dem binären FM-Signal vom Binärzustand "1" in den Binärzustand "0" erfolgt. In diesem Falle würde zu dem dem Zeitpunkt t4 entsprechenden Zeitpunkt von der in FIG 1 dargestellten Schaltungsanordnung noch ein Binärsignal "1" abgegeben werden, und der Interpolationszähler IZ würde zu diesem Zeitpunkt in eine solche Zählerstellung voreingestellt werden, daß er zu einem dem Zeitpunkt tum entsprechenden Zeitpunkt seine Endzählerstellung erreicht hat und damit das bistabile Kippglied FF in den Rücksetzzustand umsteuert.

Generell sei angemerkt, daß in den Speicherplätzen des Speichers RQM, die im vorliegenden Fall durch alle möglichen Zählerstellungen zwischen den Zählerstellungen Z3 und Z4 des Periodendauerzählers Z festgelegt sind, jeweils ein Binärsignal gespeichert ist, welches der Differenz zwischen der dem jeweiligen Speicherplatz zugehörigen Periodendauer des FM-Signals und der mittleren Periodendauer TØ dieses FM-Signals entspricht. Das betreffende Binärsignal wird dabei auf die entsprechende Adressierung des Speichers ROM hin in den Interpolationszähler IZ zu dessen Voreinstellung geladen. Damit ist gewährleistet, daß der Wechsel des von dem bistabilen Kippglied FF jeweils abgegebenen Binärsignals vom einen Binärzustand in den anderen Binärzustand stets zu einem Zeitpunkt tum erfolgt, zu dem auf der Übergangskurve gemäß FIG 2a tatsächlich die mittlere Periodendauer TØ des FM-Signals erreicht ist. Die Adressierung des Speichers ROM erfolgt dabei praktisch mit den durch die Periodendauermessungen gewonnenen Meßsignalen, die erst bei Überschreiten eines vorgegebenen Schwellwertes (Zählerstellung Z3) oder bei Unterschreiten eines ebenfalls vorgegebenen Schwellwertes (Zählerstellung Z4) die Voreinstellung und Inbetriebnahme des Interpolationszählers IZ bewirken.

**Patentansprüche**

1. Schaltungsanordnung zum Demodulieren eines insbesondere über einen bandbegrenzten Kanal übertragenen binären FM-Signals, welches mit einer einem Binärsignal "0" entsprechenden ersten Frequenz oder mit einer einem Binärsignal "1" entsprechenden zweiten Frequenz auftritt, die von der ersten Frequenz verschieden ist, wobei der Übergang von der ersten zur zweiten Frequenz und der Übergang von der zweiten zur ersten Frequenz jeweils so erfolgt, daß innerhalb des jeweiligen Übergangs auch Frequenzen zwischen der ersten und der zweiten Frequenz auftreten, mit einer Einrichtung, die bezüglich des binären FM-Signals zunächst eine Periodenmessung durchführt, wobei die die jeweilige Dauer eines Schwingungszuges des betreffenden FM-Signals angebenden Meßsignale als Adressen zur Ansteuerung eines Speichers (ROM) herangezogen werden, in welchem in durch die dem Binärwert "0" bzw. "1" entsprechenden Adressen bezeichneten Speicherplätzen jeweils ein Binärsignal "0" bzw. "1" gespeichert ist, welches auf die Adressierung des jeweiligen Speicherplatzes des Speichers (ROM) hin abgegeben wird, dadurch gekennzeichnet, daß bei Überschreiten oder Unterschreiten jeweils eines vorgegebenen Schwellwertes (Z3, Z4) durch das jeweilige Meßsignal ein Zähler (IZ) in eine Zählerstellung voreingestellt wird, die der Differenz zwischen der gerade ermittelten Periodendauer und der mittleren Periodendauer des FM-Signals entspricht, daß der betreffende Zähler (IZ) durch ihm ständig zugeführte Zählimpulse in seiner Zählerstellung so lange geändert wird, bis er eine bestimmte, von der genannten voreingestellten Zählerstellung verschiedene Zählerstellung erreicht hat, und daß ab Erreichen der betreffenden bestimmten Zählerstellung die Abgabe eines Binärsignals mit einem vom Binärwert ("0" bzw. "1") des bisher abgegebenen Binärsignals verschiedenen Binärwert ("1" bzw. "0") erfolgt.

2. Schaltungsanordnung nach Anspruch 1,, **dadurch gekennzeichnet,** daß der Speicher (ROM) ausgangsseitig mit Signaleingängen (R, S) eines bistabilen Kippgliedes (FF) verbunden ist und daß der Ausgang des Zählers (IZ) mit einem Umsteuereingang des betreffenden bistabilen Kippgliedes (FF) verbunden ist, von dessen Ausgangsseite die Binärsignale abnehmbar sind.

3. Schaltungsanordnung nach Anspruch 1 oder 2, **dadurch gekennzeichnet,** daß der genannte Zähler (IZ) ein Rückwärtszähler ist, dessen Zählerstellung im Rhythmus von Taktimpulsen (T2) geändert wird, deren Taktperiodendauer kurz ist im Vergleich zur jeweiligen Periodendauer des binären FM-Signals.

4. Schaltungsanordnung nach einem der Ansprüche 1 bis 3, **dadurch gekennzeichnet,** daß das binäre FM-Signal in ein Rechtecksignal umgeformt wird, daß das betreffende Rechtecksignal zur Steuerung eines Periodendauerzählers (Z) dient, dem zur Zählung Impulse (T1) mit einer Periodendauer zugeführt werden, die kurz ist im Vergleich zur jeweiligen Periodendauer des FM-Signals, und daß der Periodendauerzähler (Z) ausgangsseitig mit der Eingangsseite des Speichers (ROM) verbunden ist.

## Claims

1. Circuit arrangement for demodulating a binary FM signal, in particular transmitted via a band-limited channel, which signal occurs with a first frequency corresponding to a binary signal "0" or with a second frequency corresponding to a binary signal "1", which is different from the first frequency, the transition from the first frequency to the second frequency and the transition from the second frequency to the first frequency taking place in each case such that frequencies between the first frequency and the second frequency also occur within the respective transition, with a device which carries out with respect to the binary FM signal firstly a period measurement, the measuring signals specifying the respective duration of a cycle of the FM signal concerned being used as addresses for the actuation of a memory (ROM), in which there is stored in each case in memory locations designated by the addresses corresponding to the binary value "0" or "1" a binary signal "0" or "1", which is emitted in response to the addressing of the respective memory location of the memory (ROM), characterized in that, if a given threshold value (Z3, Z4) is exceeded or not reached by the respective measuring signal, a counter (IZ) is preset to a counter position which corresponds to the difference between the period duration just determined and the average period duration of the FM signal, in that the counter (IZ) concerned is altered in its counter position, by counting pulses fed constantly to it, until it has reached a certain counter position, different from the said preset counter position, and in that, having reached the certain counter position concerned, the emission of a binary signal with a binary value ("1" or "0") different from the binary value ( "0" or "1") of the previously emitted binary signal takes place.

2. Circuit arrangement according to Claim 1, characterized in that the memory (ROM) is connected on the output side to signal inputs (R, S) of a bistable element (FF) and in that the output of the counter (IZ) is connected to a reversal input of the bistable element (FF) concerned, from the output side of which the binary signals can be taken.

3. Circuit arrangement according to Claim 1 or 2, characterized in that the said counter (IZ) is a down counter, the counter position of which is altered in time with clock pulses (T2), the clock period duration of which is short in comparison with the respective period duration of the binary FM signal.

4. Circuit arrangement according to one of Claims 1 to 3, characterized in that the binary FM signal is converted into a rectangular-pulse signal, the rectangular-pulse signal concerned serving for the control of a period duration counter (Z), to which pulses (T1) having a period duration which is short in comparison with the respective period duration of the FM signal are fed for counting, and in that the period duration counter (Z) is connected on the output side to the input side of the memory (ROM).

## Revendications

1. Montage pour démoduler un signal binaire FM, qui est transmis notamment par l'intermédiaire d'un canal à bande limitée et apparaît avec une première fréquence, qui correspond à un signal binaire "0", ou avec une seconde fréquence, qui correspond à un signal binaire "1" et est différente de la première fréquence, le passage de la première fréquence à la seconde fréquence et le passage de la seconde fréquence à la première fréquence s'effectuant respectivement de telle sorte que, pendant le passage concerné, il apparaît également des fréquences se situant entre les première et seconde fréquences, et comportant un dispositif qui réalise tout d'abord une mesure de période pour ce qui concerne le signal FM binaire, auquel cas les signaux de mesure indiquant la durée respective d'un train d'oscillations du signal FM considéré sont utilisés en tant qu'adresses pour commander une mémoire (ROM), dans laquelle se trouve mémorisé, en des emplacements de la mémoire désignés par les adresses correspondants à la valeur binaire "0" ou "1", respectivement un signal binaire "0" ou "1", qui est délivré lors de l'adressage de l'emplacement correspondant de la mémoire (ROM), caractérisé par le fait que, lorsque le signal de mesure concerné passe au-delà ou au-deçà d'une valeur de seuil prédéterminée (Z3, Z4), un compteur (IZ) est préréglé dans une position de comptage, qui correspond à la différence entre la durée de la période, précisément déterminée, et la durée moyenne de la période du signal FM, que la position de comptage du compteur considéré (IZ) est modifiée par des impulsions de comptage, qui lui sont envoyées en permanence, jusqu'à ce qu'il ait atteint une position de comptage déterminée, qui diffère de ladite position de comptage préréglée, et qu'à partir du moment où ladite position de comptage considérée est atteinte, il se produit la délivrance d'un signal binaire possédant une valeur binaire ( "1" ou "0"), qui diffère de la valeur binaire ( "0" ou "1") du signal binaire délivré jusqu'alors.

2. Montage suivant la revendication 1, caractérisé par le fait que la mémoire (ROM) est reliée, au niveau de sa sortie, à des entrées de signaux (R, S) d'un circuit à bascule bistable (FF), et que la sortie du compteur (IZ) est reliée à une entrée d'inversion de commande du circuit à bascule bistable considéré (FF), sur le côté sortie duquel les signaux binaires peuvent être prélevés.

3. Montage suivant la revendication 1 ou 2, caractérisé par le fait que ledit compteur (IZ) est un compteur régressif, dont l'état de comptage est modifié au rythme d'impulsions de cadence (T2), dont la durée de la période est brève par rapport à la durée respective de la période du signal FM binaire.

4. Montage suivant l'une des revendications 1 à 3, caractérisé par le fait que le signal binaire FM est transformé en un signal rectangulaire, que le signal rectangulaire considéré est utilisé pour la commande d'un compteur (Z) de durées de périodes, auxquelles sont envoyées, pour le comptage, des impulsions (T1) possédant une période d'une durée brève par rapport à la durée respective de la période du signal FM, et que la sortie du compteur Z des durées de périodes est reliée au côté entrée de la mémoire (ROM).

# FIG 1

# FIG 2